# EUROPEAN PATENT SPECIFICATION

(11) **EP 2 797 464 B1**
(45) Date of publication and mention of the grant of the patent: **25.03.2015**
(21) Application number: 12821132.3
(22) Date of filing: 14.12.2012
(51) Int. Cl.: A47J 27/13, A47J 27/05, A47J 27/10

(54) **COOKING DEVICE**
KOCHVORRICHTUNG
DISPOSITIF DE CUISSON

(30) Priority: 31.12.2011 WO PCT/CN2011/085152
(43) Date of publication of application: 05.11.2014
(73) Proprietor: Koninklijke Philips N.V., 5656 AE Eindhoven (NL)
(72) Inventor: KELLY, Declan Patrick, NL-5656 AE Eindhoven (NL); HA, Wan Kei Ricky, NL-5656 AE Eindhoven (NL)
(74) Representative: Coops, Peter
(86) International application number: PCT/IB2012/057320
(87) International publication number: WO 2013/098697

(56) References cited:
- EP-A1- 2 316 308
- WO-A2-02/28240
- US-A1- 2007 190 221
- US-A1- 2010 154 652

## Description

### Field Of The Invention

The present invention generally relates to kitchenware, and, more particularly, to a cooking device.

### Background Of The Invention

In many cooking processes for cooking food such as rice, congee, soup and the like, water is generally used as a key ingredient to interact with the other ingredients during the heating process, so as to produce the final food products. To obtain the different tastes of the cooked food products according to the different requirements of consumers, it is advantageous to control the amount of water interacting with the ingredients, or control the amount of solute generated from the water and the ingredients.

Currently, during the cooking process, the amount of liquid such as water or solute could be controlled by pumping the liquid to a cooking chamber and/or out of a cooking chamber to one or more holding tanks. However, when pumping the solute, it is likely that the pump will become clogged due to particles in the solute, and it is difficult to clean the pump and related pipes accordingly, since they are usually fixed and difficult to remove for cleaning. Additionally, pumping the water and the solute as hot liquids during the cooking process, would further increase the high requirements imposed on the pump (e.g. reliability, heat resistance, etc).

The document WO 02/28240 discloses a cooking device with two containers.

### SUMMARY OF THE INVENTION

It is therefore desired to develop a cooking device that could allow adding liquid to or removing liquid from the cooking chamber in a convenient manner and that could overcome one or more of the disadvantages mentioned above.

To this end, there is provided a cooking device comprising a first container and a second container, one of the first and the second container being used for cooking food with water and the other being used for containing liquid; a first passage communicating the first container with the second container; a first control unit being coupled with a first valve for controlling liquid in the first container to flow to the second container via the first passage; a second passage communicating the second container with the first container; a second control unit being coupled with a second valve for controlling liquid in the second container to flow to the first container via the second passage; wherein the first control unit and the second control unit are located at the outside of the first and second containers.

This cooking device allows to add water and/or remove liquid during the cooking process and has the advantage that it can be cleaned easily because all the control units are at the outside of the containers; and since the air pump as a control unit is also outside the container, the pump does not directly contact the hot liquid, so that the requirement of reliability and heat resistance on the pump is reduced. And also the risk that the pump becomes clogged by the food is avoided.

In an embodiment, the first container is detachable and located above the second container. Alternatively, the first container is detachable and located within the second container.

Preferably, the first passage is configured as a first opening in the bottom of the first container, and the second passage is configured as a first tube positioned with its inlet located above a second opening at the bottom of the second container and with its outlet pointing downwards from above towards the first container's cavity.

Further, the first valve is configured as an electromagnetically controlled valve installed at the first opening for controlling liquid in the first container to flow to the second container via the first opening, the first control unit being used for actuating the electromagnetically controlled valve; and the second control unit is configured as a first air pump located below the second opening, and the second valve is configured as a passive one-way valve located at the second opening for preventing liquid from flowing from the second container toward the first air pump and for allowing air blowing from the first air pump to drive the liquid from the second container into the first container via the first tube.

Since the electromagnetically controlled valve and the air pump serving as the control unit do not require electrical wires connecting them with the valves, both the first container and the second container could be easily detached from the cooking device.

It should be appreciated that, in this manner, the liquid in the first container can flow to the second container under the influence of gravity via the actuated electromagnetically controlled valve installed at the first opening in the bottom of the first container, while the liquid in the second container can be made to flow through the first tube to the first container by air blowing from the first air pump. Moreover, since the first control unit for actuating the electromagnetically controlled valve and the first air pump are located at the outside of the first and the second container, there are no electrical components in the containers and no electrical connections to the containers, making the detachable first container easy to be removed and cleaned.

Further, it should be understood that the first tube can be detachable from the device or integrated in the sidewalls of the first and/or the second container. For example, the first tube can be latched or fastened to the sidewall of the container by means of some appropriate connecting components, or permanently fixed to the sidewall or the inside of the sidewall of the container by welding, molding and the like, which will be more apparent by reference to the embodiments described hereinafter.

To obtain better pumping efficiency, according to a preferred embodiment, the bottom of the second container is inclined such that the lowest portion thereof is located below the first tube. Alternatively, the bottom of the second container may be provided with a recess below the first tube. In this way, the liquid can naturally flow to the lowest portion or the recess so as to maintain a higher water level at the bottom of the first tube, which has a favorable effect on the pumping efficiency.

In a further embodiment, the first and the second container are located in a side-by-side manner. According to one aspect of this embodiment, the first passage is configured as a second tube and the second passage is configured as a third tube, wherein the second tube is positioned with its inlet located above a third opening at the bottom of the first container and with its outlet pointing downwards from above towards the second container's cavity, and the third tube is positioned with its inlet located above a fourth opening at the bottom of the second container and with its outlet pointing downwards from above towards the first container's cavity.

Further, the first control unit is configured as a second air pump located below the third opening; the second control unit is configured as a third air pump located below the fourth opening; the first valve is configured as a passive one-way valve located at the third opening for preventing liquid from flowing from the first container toward the second air pump via the third opening and for allowing air blowing from the second air pump to drive the liquid from the first container into the second container via the second tube; and the second valve is configured as a passive one-way valve located at the fourth opening for preventing liquid from flowing from the second container toward the third air pump via the fourth opening and for allowing air blowing from the third air pump to drive the liquid from the second container into the first container via the third tube.

According to another aspect of this embodiment, when there is no need to pump the liquid from one container to the other container of the two side-by-side arranged containers and from said other container to said one container at the same time, in this case, the first valve and the second valve are configured as a 3-way valve having an inlet and two outlets; the two outlets of the 3-way valve are coupled to the third opening and the fourth opening, respectively; the first control unit and the second control unit are configured as a fourth air pump coupled with the inlet of the 3-way valve; the 3-way valve is configured for preventing liquid from flowing from the first container and the second container toward the fourth air pump via the third opening and the fourth opening, respectively; and the 3-way valve is controlled for allowing air blowing from the fourth air pump to either drive the liquid from the first container into the second container via the second tube, or to drive the liquid from the second container into the first container via the third tube.

Regarding the embodiment with the first and the second container being located in a side-by-side manner, it should be also understood that the second and the third tube can be detachable from the device or integrated in the sidewalls of the first and the second container.

To avoid large particles blocking the liquid flow and/or getting into the passages, it is advantageous that the cooking device of the present invention further comprises at least one of a first filter disposed at the first container for preventing the food from blocking the liquid flowing from the first container to the second container via the first passage, and a second filter disposed at the second container for preventing the food from blocking the liquid flowing from the second container to the first container via the second passage.

These and other aspects of the present invention will be apparent from and elucidated with reference to the embodiments described hereinafter.

### BRIEF DESCRIPTION OF THE DRAWINGS

Throughout the course of the following detailed description, reference will be made to the drawings in which like reference numbers identify like parts, and in which:
Fig.1 schematically illustrates a cooking device according to a first embodiment of the present invention, wherein the first container is located above the second container ;
Fig.2, which is similar to Fig.1, illustrates an alternative embodiment of the bottom of the second container ;
Fig.3 schematically illustrates a cooking device according to a second embodiment of the present invention, wherein the first container is located within the second container;
Fig.4, which is similar to Fig.3, illustrates an alternative embodiment of the tube;
Fig.5a and Fig.5b schematically illustrate a cooking device according to a third embodiment of the present invention, wherein the tube, the valve and the air pump are respectively shown at one of the side-by-side arranged containers for purposes of clarity; and
Fig.6 schematically illustrates an alternative embodiment of the cooking device shown in Fig.5a and Fig.5b, wherein a 3-way valve and an air pump are used for meeting the special requirement that concurrent pumping is not needed.

### DESCRIPTION OF EMBODIMENTS

Although the present invention may be susceptible to embodiment in different forms, specific embodiments are shown in the drawings, and will be described in detail herein, with the understanding that the present disclosure is to be considered an exemplification of the principles of the invention, and is not intended to limit the invention to that illustrated and described hereinafter. Therefore, unless otherwise noted, features disclosed herein may be combined together to form additional combinations that were not otherwise shown for purposes of brevity.

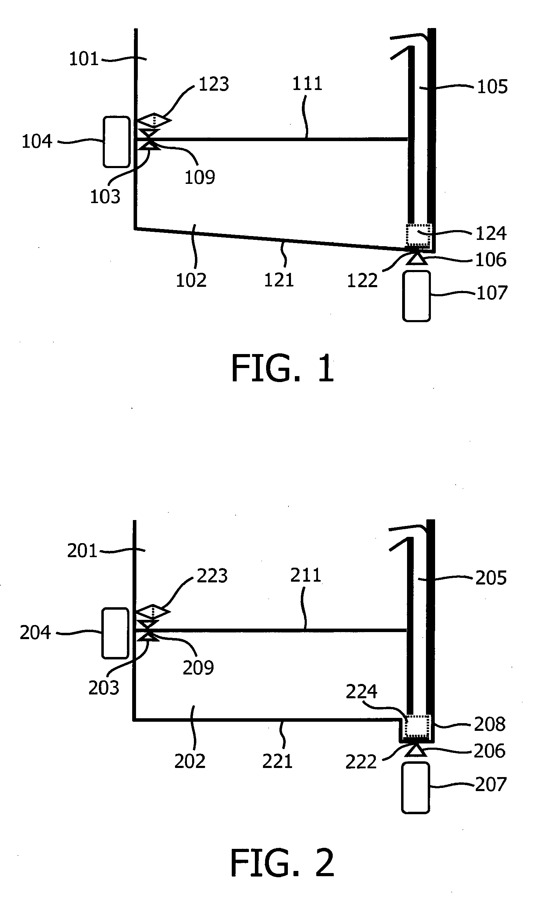

Fig.1 illustrates a cooking device according to a first embodiment of the present invention. In this embodiment, the first container 101 is detachable and located above the second container 102, and the ingredient such as rice may be contained in the second container 102 for cooking with water. The first passage is arranged as a first opening 109 formed at the bottom 111 of the first container 101. The first valve 103 is configured as an electromagnetically controlled valve 103 which is installed at the first opening 109. A first control unit 104 is located at the outside of the containers for actuating the electromagnetically controlled valve 103.

When the liquid such as water contained in the first container 101 is required to flow into the second container 102, for example, because the user expects that the food will be cooked with more water, or the water contained in the first container 101 is needed in order to add it into the second container 102 in different cooking stages, so as to obtain a special taste by utilizing the different physical and chemical changes of the ingredients in different stages of cooking, the electromagnetically controlled valve 103 is actuated to open, and then the liquid can flow through the first opening 109 to the second container 102 under the effect of gravity till the electromagnetically controlled valve 103 is closed under the control of the first control unit 104 or all water has been drained from the first container. In this way, the electromagnetically controlled valve 103 coupled to and controlled by the first control unit 104 serves to control the water flow from the first container 101 to the second container 102 via the first opening 109.

In other instances, the liquid in the second container 102 is required to flow from the second container 102 to the first container 101, for example, because during the cooking process, it is desired that the water can be supplied from the first container 101 to the second container 102 and flow back to the first container 101 after some time, or because the liquid initially contained in the second container 102 needs to be removed. For this purpose, a first tube 105 and some relevant auxiliary components for transporting the liquid are provided.

As shown in Fig.1, the second passage is a first tube 105 with its inlet located above a second opening 122 at the bottom 121 of the second container 102 and with its outlet pointing downwards from above towards the first container's cavity for communicating the first container 101 with the second container 102. A clearance exists between the inlet of the first tube 105 and the bottom 121 of the second container 102 to allow liquid to enter the first tube 105. The second valve is arranged as a passive one-way valve 106 which is located at the second opening 122 below the inlet of the first tube 105. The second control unit is arranged as an air pump 107 located outside the second container 102 and below the passive one-way valve 106. In other words, the passive one-way valve 106 is located between the first tube 105 and the first air pump 107.

The passive one-way valve 106 and the first air pump 107 are configured for preventing liquid from flowing from the second container 102 toward the first air pump 107 via the second opening 122 and for allowing air blowing from the first air pump 107 to drive the liquid from the second container 102 into the first container 101 via the first tube 105. That is to say, when the first air pump 107 starts to pump air, the one-way valve 106 is opened and the liquid in the second container 102 enters the first tube 105 through its inlet and is carried by the air to the first container 101 via the first tube 105. When the first air pump 107 stops pumping air, the one-way valve 106 is closed, thereby blocking the second opening 122 and preventing liquid from the second container from entering and flowing to the first air pump 107. In this way, the passive one-way valve 106 coupled with the first air pump 107 can control liquid flowing from the second container 102 to the first container 101 via the first tube 105.

Although the first tube 105 is shown as extending from the top of the first container 101 to the bottom of the second container 102, it should be appreciated that there is no particular tube length requirement with respect to the height of the first container 101. However, for best pumping efficiency, the proportion of the entire tube that is submerged in the liquid contained in the second container 102 is preferably as high as possible. Moreover, since the tube will be in direct contact with the food and is generally used to transport the liquid during the cooking process, the material of the first tube 105 should be food safe, heat resistant and corrosion resistant. For better usability, the contact surface of the first tube 105 is preferably provided with a non-stick coating.

As mentioned above, the cooking device of the present invention further comprises at least one filter located at the first container and at least one filter located at the second container to prevent large particles from blocking the liquid flow and the passages. Specifically, in the embodiments shown in Figs.1-4, a first filter 123, 223, 323, 423 is disposed at the first opening 109, 209, 309, 409 of the first container, respectively, for preventing the food from blocking the liquid flowing from the first container to the second container via the first opening, and a second filter 124, 224, 324, 424 is disposed at the second container, respectively, for preventing the food from blocking the liquid flowing from the second container to the first container via the first tube. For example, the second filter may be a tube with a plurality of apertures in the wall of the tube. One end of this apertured tube is connected to the inlet of the first tube 105, 205, 305, 405, and the other end is connected to the first opening, so that the air flow and liquid flow will not be blocked by the particles.

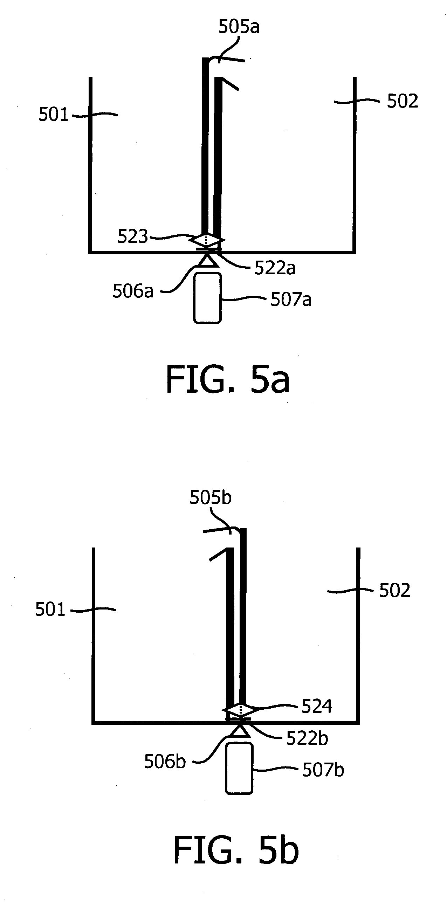

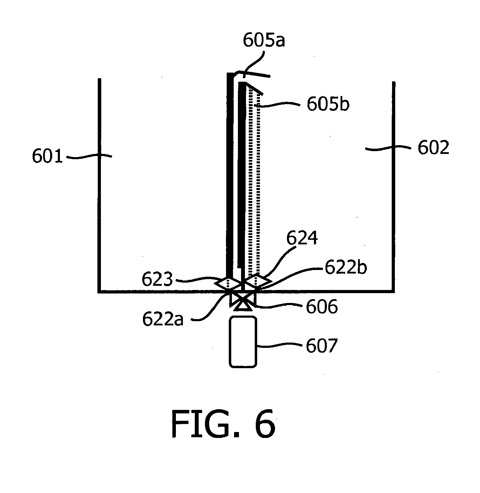

In the same way, in the embodiments shown in Figs 5a, 5b and 6, a first filter 523, 623 is disposed at the first container below the second tube 505a, 605a, respectively, and a second filter 524, 624 is disposed at the second container below the third tube 505b, 605b, respectively. It can be understood that, except for the passages, the filters can also effectively avoid the food filling the space between the inlets of the first and second passages and the valves, because if this space is filled with food, the air pump cannot work properly.

Another way for enhancing the pumping efficiency is to provide an additional space between the first tube 105 and the bottom 121 of the second container 102. Fig.1 shows an embodiment, in which the bottom 121 of the second container 102 is inclined with the lowest portion located below the first tube 105. Fig.2 schematically shows an alternative embodiment of such an additional space; in this embodiment, the bottom 221 of the second container 202 is parallel to the bottom 211 of the first container 201, as is usual, but the portion below the first tube 205 is configured as a recess 208. As to the other portions and components which are the same as those in the embodiment shown in Fig.1, they are given the similar reference numerals and the explanation thereof will be omitted.

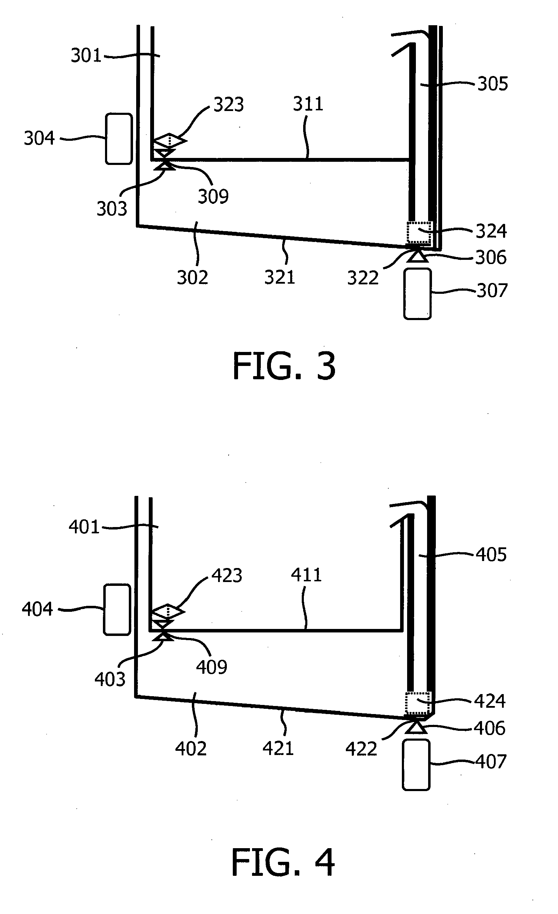

Fig.3 shows a second embodiment of the cooking device of the present invention, wherein the first container 301 is detachable and located within the second container 302. In this embodiment, the liquid transport between the first container 301 and the second container 302 can also be performed with the electromagnetically controlled valve 303, the passive one-way valve 306, the first tube 305 and associated control units, i.e. the control unit 304 and the air pump 307, so repeated description thereof will be omitted.

It will be understood that, to further simplify cleaning, the cooking device with the first container fitting within the second container is preferable, so that the first container can be easily removed for cleaning. However, in all cases mentioned above, all components coming into contact with the liquid can be removed easily since there are no electrical components in the containers.

It also can be understood that the definitions of the terms "first" and "second" are not absolute, but relative. In an embodiment shown in Fig.4, for example, the outer container 402 may be the first container while the inner container 401 is the second container. Consequently, the tube 405 may transport the liquid in the first container 402 to the second container 401 via the air pump 407 being coupled with the one-way valve 406, and the liquid in the second container 401 may flow to the first container 402 via the electromagnetically controlled valve 403 under control of the control unit 404.

Further, as mentioned above, the tube may be detachable from the device or integrated in the sidewall or attached to the inside of the sidewall of the container. As shown in Fig.1 or Fig.2, the tube 105 or the tube 205 may be configured as a separate component which can be latched on or fastened to the sidewalls of the first and the second container, or as an integrated component which can be soldered to the sidewalls of the first and the second container or which can be molded in the inside of the sidewalls of the containers. Similarly, in the embodiment shown in Fig.3, the tube 305 may be a separate component or an integrated component extending, approximately vertically, along the sidewall of the first container 301 to the sidewall of the second container 302, while in the embodiment shown in Fig.4, the tube 405 may be configured as a separate component or an integrated component extending, approximately vertically, along the sidewall of the container 402 to the sidewall of the container 401. Naturally, other embodiments including the above-mentioned features and combinations thereof that might not be explicitly disclosed herein are also possible.

Further, it is well known to those skilled in the art that the air pump connection to the one-way valve can be discretely separable from or integrated in the pump driving mechanism and magnetically coupled, and the control method of the control unit for actuating the electromagnetically controlled valve is also a common technical means in the art, so that further details need not be given herein.

Now another embodiment of the cooking device of the present invention will be explained below. Referring to Fig. 5a and Fig.5b, the first container 501 and the second container 502 can be arranged in a side-by-side manner. In this embodiment, the first passage is arranged as a second tube 505a with its inlet located above a third opening 522a at the bottom of the first container 501 and its outlet pointing downwards from above towards the second container's cavity. The second passage is arranged as a third tube 505b with its inlet located above a fourth opening 522b at the bottom of the second container 502 and with its outlet pointing downwards from above towards the first container's cavity. The first control unit is arranged as a second air pump 507a located outside the first container 501 and coupled with a passive one-way valve 506a. The passive one-way valve 506a is located at the third opening 522a between the inlet of the second tube 505a and the second air pump 507a. This is for preventing liquid from flowing from the first container 501 toward the second air pump 507a via the third opening 522a and for allowing air blowing from the second air pump 507a to drive the liquid into the second container 502 via the second tube 505a along with the air flow. Similarly, the second control unit is arranged as a third air pump 507b located outside of the second container 502 and coupled with a passive one-way valve 506b. The passive one-way valve 506b is located at the fourth opening 522b between the inlet of the third tube 505b and the third air pump 507b. With such an arrangement, the liquid can be transported from/to the first container 501 to/from the second container 502 as required in a manner as mentioned above.

In particular, if concurrent pumping is not necessary, only one air pump and a 3-way valve, such as a 2-position 3-way valve, are needed. As shown in Fig.6, the second tube 605a and the third tube 605b are also used to communicate the first container 601 with the second container 602, the third tube 605b being shown by means of dotted lines for clarity. Further, a 3-way valve 606 having an inlet and two outlets is provided, wherein the two outlets of the 3-way valve 606 are coupled to the third opening 622a and the fourth opening 622b, respectively, while the inlet of the 3-way valve 606 is coupled with a fourth air pump 607. The 3-way valve is configured for preventing liquid from flowing from the first container 601 and the second container 602 toward the fourth air pump 607. The two outlets of the 3-way valve can be controlled for allowing air blowing from the fourth air pump 607 to either drive the liquid from the first container 601 into the second container 602 via the second tube 605a, or the liquid from the second container 602 into the first container 601 via the third tube 605b. Specifically, when the valve core of the 3-way valve 606 is controlled to move and locate in a position which allows the flow from the inlet of the 3-way valve to one of the outlets of the 3-way valve coupled with the third opening 622a, the liquid in the first container 601 can be pumped through the second tube 605a to the second container 602. Similarly, if the liquid in the second container 602 is required to be pumped to the first container 601 through the third tube 605b, the valve core of the 3-way valve 606 can be controlled to move and locate in another position which allows the flow from the inlet of the 3-way valve to one of the outlets coupled with the fourth opening 622b. The 3-way valve is also configured for preventing liquid from flowing from the first container and the second container toward the fourth air pump via the third opening and the fourth opening, respectively (e.g. with integrated one-way valves at the 3-way valve outlets).

It will be understood that numerous modifications of the illustrated embodiments described above are possible, which will be readily apparent to one skilled in the art, such as many variations and modifications including the configurations and manners of movement. Taking the embodiment shown in any one of Figs. 1-4 as an example, the second container for cooking food with water can be heated from the outside, and conventional rice cookers have bottom, side and top heaters. By independently controlling these heaters, it is possible to maintain different temperatures in the second container to obtain different tastes of the cooked food. Moreover, before transporting the liquid contained in the first container into the second container, the liquid may also be heated by a heater. To obtain this object, according to an alternative embodiment, the bottom of the second container can include a hump up to the first container and this hump could include a heating component for directly heating the first container.

The cooking device of the present invention may also be used in some other possible conditions. For instance, a separate water tank can be used to add fresh water into the first or second container; in the embodiment shown in Fig.3 or Fig.4, the inner container can be removed, and then the cooking device can be used to circulate the liquid from the bottom to the top to achieve a mixing effect.

It should be noted that those skilled in the art could implement embodiments of the present invention in various ways according to the concept and principle taught by the above mentioned embodiments, and many modifications and variations of these embodiments fall within the scope of the claims, which follow hereinafter. It should also be noted that, as is conventional, the use of a single component in a claim is intended to cover one or more such components.

## Claims

1. A cooking device comprising:
- a first container (101, 201, 301, 401, 501, 601) and a second container (102, 202, 302, 402, 502, 602), one of the first and the second container being used for cooking food with water and the other being used for containing liquid;
- a first passage (109, 209, 309, 409, 505a, 605a) communicating the first container with the second container;
- a first control unit (104, 204, 304, 404, 507a) being coupled with a first valve (103, 203, 303, 403, 506a) for controlling liquid in the first container to flow to the second container via the first passage; the cooking device being **characterized in that** it comprises:
- a second passage (105, 205, 305, 405, 505b, 605b) communicating the second container with the first container;
- a second control unit (107, 207, 307, 407, 507b) being coupled with a second valve (106, 206, 306, 406, 506b) for controlling liquid in the second container to flow to the first container via the second passage; and
wherein the first control unit and the second control unit are located at the outside of the first and the second container.

2. The cooking device of Claim 1, wherein the first container is detachable and located above the second container.

3. The cooking device of Claim 1, wherein the first container is detachable and located within the second container.

4. The cooking device of Claim 1, wherein the first and the second container are located in a side-by-side manner.

5. The cooking device of Claim 2 or 3, wherein
- the first passage is configured as a first opening (109, 209, 309, 409) in the bottom (111, 211, 311, 411) of the first container, and
- the second passage is configured as a first tube (105, 205, 305, 405) positioned with its inlet located above a second opening (122, 222, 322, 422) at the bottom (121, 221, 321, 421) of the second container and with its outlet pointing downwards from above towards the first container's cavity.

6. The cooking device of Claim 5, wherein
- the first valve is configured as an electromagnetically controlled valve (103, 203, 303, 403) installed at the first opening (109, 209, 309, 409) for controlling liquid in the first container to flow to the second container via the first opening, the first control unit being used for actuating the electromagnetically controlled valve; and
- the second control unit is configured as a first air pump located below the second opening, and the second valve is configured as a passive one-way valve located at the second opening for preventing liquid from flowing from the second container toward the first air pump and for allowing air blowing from the first air pump to drive the liquid from the second container into the first container via the first tube.

7. The cooking device of Claim 6, wherein the first tube is detachable from the device or integrated in the sidewalls of the first and/or the second container.

8. The cooking device of Claim 7, wherein the bottom (121, 221, 321, 421) of the second container is inclined with the lowest portion located below the first tube.

9. The cooking device of Claim 7, wherein the bottom of the second container is provided with a recess (208) below the first tube.

10. The cooking device of Claim 4, wherein
- the first passage is configured as a second tube (505a, 605a) and the second passage is configured as a third tube (505b, 605b),
- the second tube is positioned with its inlet located above a third opening (522a, 622a) at the bottom of the first container and with its outlet pointing downwards from above towards the second container's cavity, and
- the third tube is positioned with its inlet located above a fourth opening (522b, 622b) at the bottom of the second container and with its outlet pointing downwards from above towards the first container's cavity.

11. The cooking device of Claim 10, wherein
- the first control unit is configured as a second air pump (507a) located below the third opening (522a);
- the second control unit is configured as a third air pump (507b) located below the fourth opening (522b);
- the first valve is configured as a passive one-way valve (506a) located at the third opening for preventing liquid from flowing from the first container toward the second air pump via the third opening and for allowing air blowing from the second air pump to drive the liquid from the first container into the second container via the second tube; and
- the second valve is configured as a passive one-way valve (506b) located at the fourth opening for preventing liquid from flowing from the second container toward the third air pump via the fourth opening and for allowing air blowing from the third air pump to drive the liquid from the second container into the first container via the third tube.

12. The cooking device of Claim 10, wherein
- the first valve and the second valve are configured as a 3-way valve (606) having an inlet and two outlets, the two outlets of the 3-way valve being coupled to the third opening (622a) and the fourth opening (622b), respectively;
- the first control unit and the second control unit are configured as a fourth air pump (607) coupled with the inlet of the 3-way valve;
- the 3-way valve is configured for preventing liquid from flowing from the first container and the second container toward the fourth air pump via the third opening and the fourth opening, respectively; and
- the 3-way valve is controlled for allowing air blowing from the fourth air pump to either drive the liquid from the first container into the second container via the second tube, or from the second container into the first container via the third tube.

13. The cooking device of Claim 11 or 12, wherein the second and the third tube are detachable from the device or integrated in the sidewalls of the first and the second containers.

14. The cooking device of Claim 1, wherein the cooking device further comprises at least one of:
- a first filter (123, 223, 323, 423, 523, 623) disposed at the first container for preventing the food from blocking the liquid flowing from the first container to the second container via the first passage; and
- a second filter (124, 224, 324, 424, 524, 624) disposed at the second container for preventing the food from blocking the liquid flowing from the second container to the first container via the second passage.

## Patentansprüche

1. Gargerät, umfassend:
- einen ersten Behälter (101, 201, 301, 401, 501, 601) und einen zweiten Behälter (102, 202, 302, 402, 502, 602), wobei der erste oder der zweite Behälter zum Garen von Lebensmitteln mit Wasser und der andere Behälter zur Aufnahme von Flüssigkeit verwendet wird;
- einen ersten Durchlass (109, 209, 309, 409, 505a, 605a), der den ersten Behälter mit dem zweiten Behälter verbindet;
- eine erste Steuereinheit (104, 204, 304, 404, 507a), die mit einem ersten Ventil (103, 203, 303, 403, 506a) gekoppelt ist, um Flüssigkeit in dem ersten Behälter so zu steuern, dass diese über den ersten Durchlas zu dem zweiten Behälter fließt;
wobei das Gargerät **dadurch gekennzeichnet** ist, dass es umfasst:
- einen zweiten Durchlass (105, 205, 305, 405, 505b, 605b), der den zweiten Behälter mit dem ersten Behälter verbindet;
- eine zweite Steuereinheit (107, 207, 307, 407, 507b), die mit einem zweiten Ventil (106, 206, 306, 406, 506b) gekoppelt ist, um Flüssigkeit in dem zweiten Behälter so zu steuern, dass diese über den zweiten Durchlass zu dem ersten Behälter fließt; und wobei die erste Steuereinheit und die zweite Steuereinheit auf der Außenseite des ersten und des zweiten Behälters angeordnet sind.

2. Gargerät nach Anspruch 1, wobei der erste Behälter abnehmbar ist und sich über dem zweiten Behälter befindet.

3. Gargerät nach Anspruch 1, wobei der erste Behälter abnehmbar ist und sich innerhalb des zweiten Behälters befindet.

4. Gargerät nach Anspruch 1, wobei der erste und der zweite Behälter nebeneinander angeordnet sind.

5. Gargerät nach Anspruch 2 oder 3, wobei
- der erste Durchlass als eine erste Öffnung (109, 209, 309, 409) in dem Boden (111, 211, 311, 411) des ersten Behälters ausgeführt ist, und
- der zweite Durchlass als ein erstes Rohr (105, 205, 305, 405) ausgeführt ist, das so positioniert ist, dass sich sein Einlass über einer zweiten Öffnung (122, 222, 322, 422) am Boden (121, 221, 321, 421) des zweiten Behälters befindet und sein Auslass von oben zu dem Hohlraum des ersten Behälters hin nach unten zeigt.

6. Gargerät nach Anspruch 5, wobei
- das erste Ventil als ein elektromagnetisch geregeltes Ventil (103, 203, 303, 403) ausgeführt ist, das an der ersten Öffnung (109, 209, 309, 409) montiert ist, um Flüssigkeit in dem ersten Behälter so zu steuern, dass diese über die erste Öffnung zu dem zweiten Behälter fließt, wobei die erste Steuereinheit zur Betätigung des elektromagnetisch geregelten Ventils verwendet wird; und
- die zweite Steuereinheit als eine unter der zweiten Öffnung angeordnete erste Luftpumpe ausgeführt ist und das zweite Ventil als ein passives Einwegventil ausgeführt ist, das an der zweiten Öffnung angeordnet ist, um zu verhindern, dass Flüssigkeit aus dem zweiten Behälter zu der ersten Luftpumpe fließt, und damit die Flüssigkeit durch die aus der ersten Luftpumpe geblasene Luft von dem zweiten Behälter über das erste Rohr in den ersten Behälter fließen kann.

7. Gargerät nach Anspruch 6, wobei das erste Rohr von dem Gerät abnehmbar oder in die Seitenwände des ersten und/oder des zweiten Behälters integriert ist.

8. Gargerät nach Anspruch 7, wobei der Boden (121, 221, 321, 421) des zweiten Behälters in Bezug auf den unter dem ersten Rohr angeordneten untersten Teil abfallend ist.

9. Gargerät nach Anspruch 7, wobei der Boden des zweiten Behälters mit einer Ausnehmung (208) unter dem ersten Rohr versehen ist.

10. Gargerät nach Anspruch 4, wobei
- der erste Durchlass als ein zweites Rohr (505a, 605a) ausgeführt ist und der zweite Durchlass als ein drittes Rohr (505b, 605b) ausgeführt ist,
- das zweite Rohr so positioniert ist, dass sein Einlass über einer dritten Öffnung (522a, 622a) am Boden des ersten Behälters angeordnet ist und sein Auslass von oben zu dem Hohlraum des zweiten Behälters hin nach unten zeigt, und
- das dritte Rohr so positioniert ist, dass sein Einlass über einer vierten Öffnung (522b, 622b) am Boden des zweiten Behälters angeordnet ist und sein Auslass von oben zu dem Hohlraum des ersten Behälters hin nach unten zeigt.

11. Gargerät nach Anspruch 10, wobei
- die erste Steuereinheit als eine zweite Luftpumpe (507a) ausgeführt ist, die unter der dritten Öffnung (522a) angeordnet ist;
- die zweite Steuereinheit als eine dritte Luftpumpe (507b) ausgeführt ist, die unter der vierten Öffnung (522b) angeordnet ist;
- das erste Ventil als ein passives Einwegventil (506a) ausgeführt ist, das an der dritten Öffnung angeordnet ist, um zu verhindern, dass Flüssigkeit aus dem ersten Behälter über die dritte Öffnung zu der zweiten Luftpumpe fließt, und damit die Flüssigkeit durch die aus der zweiten Luftpumpe geblasene Luft von dem ersten Behälter über das zweite Rohr in den zweiten Behälter fließen kann; und
- das zweite Ventil als ein passives Einwegventil (506b) ausgeführt ist, das an der vierten Öffnung angeordnet ist, um zu verhindern, dass Flüssigkeit aus dem zweiten Behälter über die vierte Öffnung zu der dritten Luftpumpe fließt, und damit die Flüssigkeit durch die aus der dritten Luftpumpe geblasene Luft von dem zweiten Behälter über das dritte Rohr in den ersten Behälter fließen kann.

12. Gargerät nach Anspruch 10, wobei
- das erste Ventil und das zweite Ventil als ein Dreiwegeventil (606) mit einem Einlass und zwei Auslässen ausgeführt sind, wobei die zwei Auslässe des Dreiwegeventils mit der dritten Öffnung (622a) bzw. der vierten Öffnung (622b) gekoppelt sind;
- die erste Steuereinheit und die zweite Steuereinheit als eine mit dem Einlass des Dreiwegeventils gekoppelte vierte Luftpumpe (6ß7) ausgeführt sind;
- das Dreiwegeventil so ausgeführt ist, dass es verhindert, dass Flüssigkeit aus dem ersten Behälter und dem zweiten Behälter über die dritte Öffnung bzw. die vierte Öffnung zu der vierten Luftpumpe hin fließt; und
- das Dreiwegeventil so geregelt wird, dass durch die aus der vierten Luftpumpe geblasene Luft entweder die Flüssigkeit aus dem ersten Behälter über das zweite Rohr in den zweiten Behälter oder aus dem zweiten Behälter über das dritte Rohr in den ersten Behälter fließen kann.

13. Gargerät nach Anspruch 11 oder 12, wobei das zweite und das dritte Rohr von dem Gerät abnehmbar oder in die Seitenwände des ersten und des zweiten Behälters integriert sind.

14. Gargerät nach Anspruch 1, wobei das Gargerät weiterhin mindestens einen der folgenden Filter umfasst:
- einen an dem ersten Behälter angeordneten ersten Filter (123, 223, 323, 423, 523, 623), um zu verhindern, dass das Lebensmittel die aus dem ersten Behälter über den ersten Durchlass in den zweiten Behälter fließende Flüssigkeit blockiert; sowie
- einen an dem zweiten Behälter angeordneten zweiten Filter (124, 224, 324, 424, 524, 624), um zu verhindern, dass das Lebensmittel die aus dem zweiten Behälter über den zweiten Durchlass in den ersten Behälter fließende Flüssigkeit blockiert.

## Revendications

1. Dispositif de cuisson contenant :
- un premier récipient (101, 201, 301, 401, 501, 601) et un deuxième récipient (102, 202, 302, 402, 502, 602), l'un du premier récipient et du deuxième récipient étant utilisé pour cuire des aliments avec de l'eau et l'autre étant utilisé pour contenir un liquide ;
- un premier passage (109, 209, 309, 409, 505a, 605a) mettant le premier récipient en communication avec le deuxième récipient ;
- une première unité de commande (104, 204, 304, 404, 507a) étant couplée à une première vanne (103, 203, 303, 403, 506a) pour commander à un liquide dans le premier récipient de s'écouler dans le deuxième récipient par l'intermédiaire du premier passage ;
le dispositif de cuisson étant **caractérisé en ce qu'**il comprend :
- un deuxième passage (105, 205, 305, 405, 505b, 605b) mettant le deuxième récipient en communication avec le premier récipient ;
- une deuxième unité de commande (107, 207, 307, 407, 507b) étant couplée à une deuxième vanne (106, 206, 306, 406, 506b) pour commander à un liquide dans le deuxième récipient de s'écouler dans le premier récipient par l'intermédiaire du deuxième passage ; et
dans lequel la première unité de commande et la deuxième unité de commande sont situées à l'extérieur du premier récipient et du deuxième récipient.

2. Dispositif de cuisson selon la revendication 1, dans lequel le premier récipient est détachable et situé au-dessus du deuxième récipient.

3. Dispositif de cuisson selon la revendication 1, dans lequel le premier récipient est détachable et situé à l'intérieur du deuxième récipient.

4. Dispositif de cuisson selon la revendication 1, dans lequel le premier récipient et le deuxième récipient sont situés côte à côte.

5. Dispositif de cuisson selon la revendication 2 ou 3, dans lequel
- le premier passage est configuré sous la forme d'une première ouverture (109, 209, 309, 409) au fond (111, 211, 311, 411) du premier récipient, et
- le deuxième passage est configuré sous la forme d'un premier tube (105, 205, 305, 405) positionné avec son entrée située au-dessus d'une deuxième ouverture (122, 222, 322, 422) au fond (121, 221, 321, 421) du deuxième récipient et avec sa sortie pointant vers le bas par le dessus vers la cavité du premier récipient.

6. Dispositif de cuisson selon la revendication 5, dans lequel
- la première vanne est configurée sous la forme d'une vanne à commande électromagnétique (103, 203, 303, 403) installée à la première ouverture (109, 209, 309, 409) pour commander à un liquide dans le premier récipient de s'écouler dans le deuxième récipient par l'intermédiaire de la première ouverture, la première unité de commande étant utilisée pour actionner la vanne à commande électromagnétique ; et
- la deuxième unité de commande est configurée sous la forme d'une première pompe à air située au-dessous de la deuxième ouverture, et la deuxième vanne est configurée sous la forme d'une vanne unidirectionnelle passive située à la deuxième ouverture pour empêcher tout écoulement de liquide du deuxième récipient vers la première pompe à air et pour permettre à l'air soufflant de la première pompe à air d'entraîner le liquide du deuxième récipient dans le premier récipient par l'intermédiaire du premier tube.

7. Dispositif de cuisson selon la revendication 6, dans lequel le premier tube est détachable du dispositif ou est intégré aux parois latérales du premier récipient et/ou du deuxième récipient.

8. Dispositif de cuisson selon la revendication 7, dans lequel le fond (121, 221, 321, 421) du deuxième récipient est incliné avec la plus basse portion située au-dessous du premier tube.

9. Dispositif de cuisson selon la revendication 7, dans lequel le fond du deuxième récipient est pourvu d'un évidement (208) au-dessous du premier tube.

10. Dispositif de cuisson selon la revendication 4, dans lequel
- le premier passage est configuré sous la forme d'un deuxième tube (505a, 605a) et le deuxième passage est configuré sous la forme d'un troisième tube (505b, 605b),
- le deuxième tube est positionné avec son entrée située au-dessus d'une troisième ouverture (522a, 622a) au fond du premier récipient et avec sa sortie pointant vers le bas par le dessus vers la cavité du deuxième récipient, et
- le troisième tube est positionné avec son entrée située au-dessus d'une quatrième ouverture (522b, 622b) au fond du deuxième récipient et avec sa sortie pointant vers le bas par le dessus vers la cavité du premier récipient.

11. Dispositif de cuisson selon la revendication 10, dans lequel
- la première unité de commande est configurée sous la forme d'une deuxième pompe à air (507a) située au-dessous de la troisième ouverture (522a) ;
- la deuxième unité de commande est configurée sous la forme d'une troisième pompe à pair (507b) située au-dessous de la quatrième ouverture (522b) ;
- la première vanne est configurée sous la forme d'une vanne unidirectionnelle passive (506a) située à la troisième ouverture pour empêcher tout écoulement de liquide du premier récipient vers la deuxième pompe à air par l'intermédiaire de la troisième ouverture et pour permettre à l'air soufflant de la deuxième pompe à air d'entraîner le liquide du premier récipient dans le deuxième récipient par l'intermédiaire du deuxième tube ; et
- la deuxième vanne est configurée sous la forme d'une vanne unidirectionnelle passive (506b) située à la quatrième ouverture pour empêcher tout écoulement de liquide du deuxième récipient vers la troisième pompe à air par l'intermédiaire de la quatrième ouverture et pour permettre à l'air soufflant de la troisième pompe à air d'entraîner le liquide du deuxième récipient dans le premier récipient par l'intermédiaire du troisième tube.

12. Dispositif de cuisson selon la revendication 10, dans lequel
- la première vanne et la deuxième vanne sont configurées sous la forme d'une vanne tridirectionnelle (606) comportant une entrée et deux sorties, les deux sorties de la vanne tridirectionnelle étant couplées respectivement à la troisième ouverture (622a) et à la quatrième ouverture (622b) ;
- la première unité de commande et la deuxième unité de commande sont configurées sous la forme d'une quatrième pompe à air (607) couplée à l'entrée de la vanne tridirectionnelle ;
- la vanne tridirectionnelle est configurée pour empêcher tout écoulement de liquide du premier récipient et du deuxième récipient vers la quatrième pompe à air par l'intermédiaire respectivement de la troisième ouverture et de la quatrième ouverture ; et
- la vanne tridirectionnelle est commandée pour permettre à l'air soufflant de la quatrième pompe à air d'entraîner le liquide du premier récipient dans le deuxième récipient par l'intermédiaire du deuxième tube ou du deuxième récipient dans le premier récipient par l'intermédiaire du troisième tube.

13. Dispositif de cuisson selon la revendication 11 ou 12, dans lequel le deuxième tube et le troisième tube sont détachables du dispositif ou sont intégrés aux parois latérales du premier récipient et du deuxième récipient.

14. Dispositif de cuisson selon la revendication 1, dans lequel le dispositif de cuisson comprend en outre au moins l'un de :
- un premier filtre (123, 223, 323, 423, 523, 623) disposé au premier récipient pour empêcher que des aliments ne bloquent le liquide s'écoulant du premier récipient dans le deuxième récipient par l'intermédiaire du premier passage ; et
- un deuxième filtre (124, 224, 324, 424, 524, 624) disposé au deuxième récipient pour empêcher que des aliments ne bloquent le liquide s'écoulant du deuxième récipient dans le premier récipient par l'intermédiaire du deuxième passage.
